## Europäisches Patentamt
## European Patent Office
## Office européen des brevets

(19)

(11) Veröffentlichungsnummer: **0 062 601**
**B1**

(12)

# EUROPÄISCHE PATENTSCHRIFT

(45) Veröffentlichungstag der Patentschrift:
**23.01.85**

(51) Int. Cl.⁴: **H 02 J 9/06**

(21) Anmeldenummer: **82730021.1**

(22) Anmeldetag: **03.03.82**

(54) **Schaltungsanordnung zur Sicherung der Betriebsspannungsversorgung einer elektronischen Schaltungseinheit.**

(30) Priorität: **31.03.81 DE 3113523**

(43) Veröffentlichungstag der Anmeldung:
**13.10.82 Patentblatt 82/41**

(45) Bekanntmachung des Hinweises auf die Patenterteilung:
**23.01.85 Patentblatt 85/4**

(84) Benannte Vertragsstaaten:
**AT CH DE GB LI**

(56) Entgegenhaltungen:
**EP - A - 0 019 222**

**ELECTRONICS INTERNATIONAL, Band 53, Nr.2, 27. Januar 1981, New York (US) F.A. SCHERPENBERG: "Static n-MOS RAM idles on trickle current", Seiten 129 bis 132**

(73) Patentinhaber: **Siemens Aktiengesellschaft, Berlin und München Wittelsbacherplatz 2, D-8000 München 2 (DE)**

(72) Erfinder: **Bruns, Hartmut, Dipl.-Ing., Burnhörn 4, D-2910 Westerstede II (DE)**

**Beschreibung**

Die Erfindung bezieht sich auf eine Schaltungsanordnung zur Sicherung der Betriebsspannungsversorgung einer elektronischen Schaltungseinheit, die über einen in einem Längszweig der Schaltungsanordnung liegenden Gleichrichter an eine Betriebsspannungsquelle und über eine im Längszweig der Schaltungsanordnung mit seiner Drain-Source-Strecke liegenden Feldeffekt-Transistor an eine Betriebshilfsspannungsquelle angeschlossen ist, wobei die elektronische Schaltungseinheit in einem Querzweig der Schaltungsanordnung liegt und mit einem Anschlußpunkt an die Source-Elektrode und die Betriebshilfsspannungsquelle mit einem Anschlußpunkt an die Drain-Elektrode des Feldeffekt-Transistors angeschlossen ist.

Eine bekannte Schaltungsanordnung dieser Art (»Electronics«, Jon. 1981, S. 129—132) enthält einen selbstsperrenden Feldeffekt-Transistor, der von einem Komparator gesteuert wird. Am invertierenden Eingang dieses Komparators liegt ein Teil der Spannung der Betriebsspannungsquelle, während der nicht invertierende Eingang mit einer Betriebshilfsspannungsquelle in Form einer Batterie verbindbar ist. Diese Verbindung wird jeweils dann hergestellt, wenn durch einen Prozessor der bekannten Schaltungsanordnung eine Veränderung der Spannung der Betriebsspannungsquelle festgestellt wird. Der Komparator kann dann einen Spannungsvergleich zwischen dem anliegenden Teil der Spannung der Betriebsspannungsquelle und der Spannung der Betriebshilfsspannungsquelle durchführen und bei Spannungsgleichheit ein Schaltsignal auf die Gate-Elektrode des selbstsperrenden Feldeffekt-Transistors geben, wodurch dieser durchgeschaltet wird; die elektronische Schaltungseinheit ist dann mit der Betriebshilfsspannungsquelle verbunden.

Bei einer weiteren bekannten Schaltungsanordnung (EP-A-0 019 222) ist eine elektronische Schaltungseinheit über einen ersten selbstsperrenden Feldeffekt-Transistor mit einer Betriebsspannungsquelle verbunden. Eine Betriebshilfsspannungsquelle liegt in Reihe mit einer derart gepolten Diode, daß diese bei einem Absinken der Spannung der Betriebsspannungsquelle leitend wird. Ein Anschluß der Betriebshilfsspannungsquelle an die elektronische Schaltungseinheit erfolgt aber erst dann, wenn über eine TTL-Logik ein Transistor gesperrt worden ist. Daraufhin wird nämlich ein weiterer selbstsperrender Feldeffekt-Transistor durchgeschaltet und damit der Stromkreis von der Betriebshilfsspannungsquelle zur elektronischen Schaltungseinheit geschlossen.

Die bekannten Schaltungsanordnungen sind verhältnismäßig aufwendig. Der Erfindung liegt daher die Aufgabe zugrunde, eine Schaltungsanordnung zur Sicherung der Betriebsspannungsversorgung einer elektronischen Schaltungseinheit bzw. zur unterbrechungsfreien Umschaltung von einer Betriebsspannungsquelle auf eine Betriebshilfsspannungsquelle vorzuschlagen, die eines sehr geringen Schaltungsaufwandes bedarf und damit sehr zuverlässig ist.

Zur Lösung dieser Aufgabe ist bei einer Schaltungsanordnung der eingangs angegebenen Art der Feldeffekt-Transistor ein selbstleitender Feldeffekt-Transistor, und in einem parallelen Querzweig zur elektronischen Schaltungseinheit liegt ein Spannungsteiler, dessen Abgriff mit der Gate-Elektrode des Feldeffekt-Transistors verbunden ist.

Die erfindungsgemäße Schaltungsanordnung hat u. a. den Vorteil, daß die Schaltungsanordnung sehr einfach aufgebaut ist, weil sie lediglich aus einem selbstleitenden Feldeffekt-Transistor und einem Spannungsteiler besteht. Außerdem weist die erfindungsgemäße Schaltungsanordnung den Vorteil auf, daß sie eine Spannungsstabilisierung selbst bei sehr kleinen Strömen ermöglicht, was mit Zener-Dioden nicht erreichbar ist. Entsprechendes gilt für die Umschaltung von der Betriebsspannungsquelle auf die Betriebshilfsspannungsquelle.

Während die Betriebsspannungsquelle in der Regel von einem Netzgerät gebildet ist, kann die Betriebshilfsspannungsquelle in unterschiedlicher Weise ausgebildet sein; beispielsweise kann sie aus einem weiteren Netzgerät bestehen, das gegebenenfalls aus einem anderen Stromkreis als das die Betriebsspannungsquelle bildende Netzgerät gespeist ist. Vorzugsweise besteht die Betriebshilfsspannungsquelle jedoch aus einer Batterie oder einem Akku und ist somit unabhängig von einem Netzausfall. Die Betriebshilfsspannungsquelle kann auch aus einem aufgeladenen Kondensator bestehen.

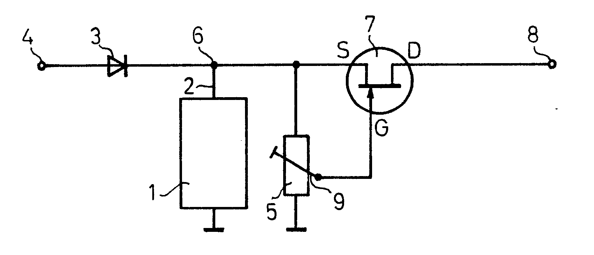

Zur Erläuterung der Erfindung ist in der Figur ein Ausführungsbeispiel der erfindungsgemäßen Schaltungsanordnung dargestellt.

Bei dem dargestellten Ausführungsbeispiel ist eine elektronische Schaltungseinheit 1, deren Betriebsspannungsversorgung sichergestellt werden soll, von einem C-Mos-Speicherbaustein gebildet. Die elektronische Schaltungseinheit 1 liegt in einem Querzweig und ist mit ihrem einen Anschlußpunkt über einen Gleichrichter 3 mit einem Ausgang 4 eines nicht dargestellten Netzgerätes verbunden, das die Betriebsspannungsquelle für die elektronische Schaltungseinheit 1 darstellt.

In einem parallelen Querzweig zur elektronischen Schaltungseinheit 1 liegt ein Spannungsteiler 5, dessen einer Anschlußpunkt 6 mit dem Anschlußpunkt 2 der elektronischen Schaltungseinheit 1 verbunden ist. An den Anschlußpunkt 6 ist die Source-Elektrode S eines selbstleitenden Feldeffekt-Transistors 7 angeschlossen, dessen Drain-Elektrode D an einen Anschluß 8 einer Betriebshilfsspannungsquelle geführt ist, die von einer nicht dargestellten Batterie oder von einem Akku gebildet sein kann. Der Feldeffekt-Transistor 7 liegt somit mit seiner Drain-Source-Strecke im Längszweig der dargestellten Schaltungsanordnung. Seine Gate-Elektrode G ist an einem Abgriff 9 des Spannungsteilers 5 angeschlossen.

Bei dem Feldeffekt-Transistor 7 kann es sich um einen p-Kanal- oder um einen n-Kanal-Feldeffekt-Transistor handeln, je nach Polung der Betriebsspannungsquellen.

Die Schaltungsanordnung wird in folgender Weise dargestellt:

Fällt die Betriebsspannungsquelle aus, dann sinkt die Betriebsspannung am Ausgang 4 und damit auch die Betriebsspannung an der elektronischen Schaltungseinheit 1. Wird beim Absinken der Betriebsspannung die am Spannungsteiler 5 eingestellte Pinch-off-Spannung des Feldeffekt-Transistors 7 unterschritten, dann wird dieser Transistor 7 leitend und damit die Betriebsspannungsversorgung aus der Betriebshilfsspannungsquelle über deren Ausgang 8 sichergestellt, so daß an der elektronischen Schaltungseinheit 1 eine ausreichende Betriebsspannung auch nach Ausfall der Betriebsspannungsquelle erhalten bleibt.

Wird das nicht dargestellte Netzgerät bzw. die Betriebsspannungsquelle wieder aktiv, dann steht am Schaltungpunkt 6 und damit am Spannungsteiler 5 wieder eine höhere Spannung an, und es tritt eine Gate-Source-Spannung auf, die größer als die Pinch-off-Spannung ist. Der Feldeffekt-Transistor 7 wird dadurch gesperrt und die Betriebshilfsspannungsquelle nicht mehr belastet.

**Patentanspruch**

Schaltungsanordnung zur Sicherung der Betriebsspannungsversorgung einer elektronischen Schaltungseinheit (1), die über einen in einem Längszweig der Schaltungsanordnung liegenden Gleichrichter (3) an eine Betriebsspannungsquelle (4) und über eine im Längszweig der Schaltungsanordnung mit seiner Drain-Source-Strecke liegenden Feldeffekt-Transistor (7) an eine Betriebshilfsspannungsquelle (8) angeschlossen ist, wobei die elektronische Schaltungseinheit (1) in einem Querzweig der Schaltungsanordnung liegt und mit einem Anschlußpunkt an die Source-Elektrode (5) und die Betriebshilfsspannungsquelle mit einem Anschlußpunkt an die Drain-Elektrode (D) des Feldeffekt-Transistors (7) angeschlossen ist, dadurch gekennzeichnet, daß der Feldeffekt-Transistor ein selbstleitender Feldeffekt-Transistor (7) ist und daß in einem parallelen Querzweig zur elektronischen Schaltungseinheit (1) ein Spannungsteiler (5) liegt, dessen Abgriff (9) mit der Gate-Elektrode (G) des Feldeffekt-Transistors (7) verbunden ist.

**Claim**

A circuit arrangement for safeguarding the operating voltage supply of an electronic circuit module (1) connected to an operating voltage source (4) via a rectifier (3) in a series arm of the circuit arrangement, and connected to an auxiliary operating voltage source (8) via a field effect transistor (7) whose drain-source path is arranged in the series arm of the circuit arrangement, where the electronic circuit module (1) is arranged in a shunt arm of the circuit arrangement and is connected by one terminal point to the source electrode (S) of the field effect transistor (7), whereas the auxiliary operating voltage source is connected by one terminal point to the drain electrode (D) thereof, characterised in that the field effect transistor is a self-conductive field effect transistor (7) and that a shunt arm parallel to the electronic circuit module (1) contains a voltage divider (5) whose tapping (9) is connected to the gate electrode (G) of the field effect transistor (7).

**Revendication**

Montage pour assurer l'alimentation en tension de fonctionnement d'une unité de commutation électronique (1) qui est reliée, par l'intermédiaire d'un redresseur (3) situé dans une branche longitudinale du montage, à une source de tension de fonctionnement (4), et, par l'intermédiaire d'un transistor à effet de champ (7) dont le circuit drain-source est situé dans la branche longitudinale du montage, à une source de tension auxiliaire de fonctionnement (8), l'unité de commutation électronique (1) étant située dans une branche transversale du montage et étant reliée, par un point de liaison, à l'électrode de source (S), alors que la source de tension auxiliaire de fonctionnement est reliée, par un point de liaison, à l'électrode de drain (D) du transistor à effet de champ (7), caractérisé par le fait que le transistor à effet de champ est un transistor à effet de champ à auto-conduction et que dans une branche transversale parallèle à l'unité électronique de commutation (1), est monté un diviseur de tension (5) dont la prise (9) est reliée à l'électrode de grille (G) du transistor à effet de champ (7).